Europäisches Patentamt

European Patent Office

Office européen des brevets

(11) Publication number: **0 090 636**
**B1**

## (12) EUROPEAN PATENT SPECIFICATION

(45) Date of publication of patent specification: **19.08.87**

(21) Application number: **83301743.7**

(22) Date of filing: **29.03.83**

(51) Int. Cl.⁴: **G 01 N 27/07,** G 01 N 27/28, B 01 L 3/00

(54) Liquid transport device.

(30) Priority: **29.03.82 US 362930**

(43) Date of publication of application:
**05.10.83 Bulletin 83/40**

(45) Publication of the grant of the patent:
**19.08.87 Bulletin 87/34**

(84) Designated Contracting States:
**CH DE FR GB LI**

(56) References cited:
**EP-A-0 023 156**
**EP-A-0 023 157**
**DE-A-2 509 163**
**DE-A-2 854 444**
**FR-A-1 444 146**
**FR-A-2 394 801**

(73) Proprietor: **EASTMAN KODAK COMPANY**
**343 State Street**
**Rochester New York 14650 (US)**

(72) Inventor: **Columbus, Richard Lewis**
**230 Ambassador Drive**
**Rochester, NY 14610 (US)**

(74) Representative: **Baron, Paul Alexander Clifford et al**
**Kodak Limited Patent Department Headstone Drive**
**Harrow Middlesex HA1 4TY (GB)**

Courier Press, Leamington Spa, England.

# 0 090 636

**Description**

This invention relates to a device for transporting liquid into different zones by capillary attraction according to the preamble of Claim 1.

US—A—4271119 is directed to such a liquid transport device which comprises a first capillary zone adapted to receive a quantity of liquid and a second capillary zone which extends from a diverting aperture in a wall member of the first capillary zone. The diverting aperture is shaped to divert liquid from the first zone into the second zone before the liquid flow of the first zone completely surrounds the diverting aperture, since failure to achieve flow into the second zone before the aperture is surrounded results in air entrapment in the second zone. Such a device has proved to be highly useful as an ion bridge for potentiometric test elements.

In the device described above, the diverting aperture has a cross-sectional flow-through area greater than about 0.2 mm², and the shape of the diverting aperture is critical. The aperture must be considerably longer than it is wide, having a length to width ratio of between about 2.5 and about 10.0. In other words, the width dimension must be no greater than 0.4 that of the length dimension. Such width-to-length relationships exclude circular apertures. Although apertures within the described limits work well, there is a problem in manufacturing devices of this type which have apertures of the required dimensions. It was recognized that it would be advantageous to provide such a device wherein the diverting aperture is, for example, circular in shape and has a flow-through area greater than about 0.2 mm².

The present invention overcomes the problems noted above. The capillary zones are dimensioned such that the second capillary zone can be completely filled with liquid through a diverting aperture of a type which can take a number of shapes, including a circular shape.

In accordance with the present invention, there is provided a liquid transport device comprising members and sidewalls arranged to define a first capillary transport zone, said members having a first set of opposing surfaces spaced apart a distance effective to provide capillary flow of liquid introduced into said zone, said sidewalls defining a flow-through width of said zone, said device having liquid access means for receiving liquid into said zone and a vent for venting air from said zone, means defining a second nonvented capillary transport zone, one of said members having a diverting aperture having a flow-through area greater than 0.2 mm² for diverting liquid into said second zone, said second zone having a length and a terminating surface at one end of said second zone, said aperture having a first dimension extending transverse to the direction of liquid flow from said access means to said aperture and a second dimension extending generally parallel to said direction, characterized in that said second dimension is greater than 0.4 of said first dimension, and the relationship of said first dimension to said width and of said distance to said length being effective to insure that the liquid in said first zone enters said diverting aperture and contacts said surface before the liquid in said zone surrounds said aperture, said distance h being at least that defined by the equation $h=(150+0.87\ t_o)$ micrometres wherein h is said distance and $t_o$ is said length of said second zone, at least one of said surfaces being readily wetted by a liquid having a surface tension between 0.025 Nm⁻¹ and 0.075 Nm⁻¹.

Thus, it is an advantage of the present invention that capillary flow is successfully diverted from a first zone so as to flow the length of a second zone, without the need for an air vent in the second zone. It is a further advantage of the invention that such flow is achieved using apertures of many shapes, including circular apertures which can be easily formed during the manufacturing of the liquid transport device.

Embodiments of the present invention will now be described, by way of example, with reference to the accompanying drawings in which:

Fig. 1 is a plan view of a device constructed in accordance with the invention;

Fig. 2 is a fragmentary section view taken generally along the line II—II of Fig. 1;

Fig. 3 is a section view taken generally along the line III—III of Fig. 1;

Fig. 4 is a fragmentary section view similar to a portion of Fig. 2, but considerably enlarged and showing fluid flow; and

Fig. 5 is a graph of liquid head at the diverting aperture plotted against length of the second capillary transport zone.

The preferred embodiments hereinafter described refer particularly to the use of the invention in an element for the potentiometric detection of ionic analytes. In addition, the invention is useful in other types of liquid transport devices.

The ionic analytes, commonly called electrolytes, detectable by the preferred embodiment are those present in biological or industrial liquids. The device of the present invention works particularly well for biological liquids such as serum, urine and spinal fluid having surface tensions between .025 Nm⁻¹ and .075 Nm⁻¹.

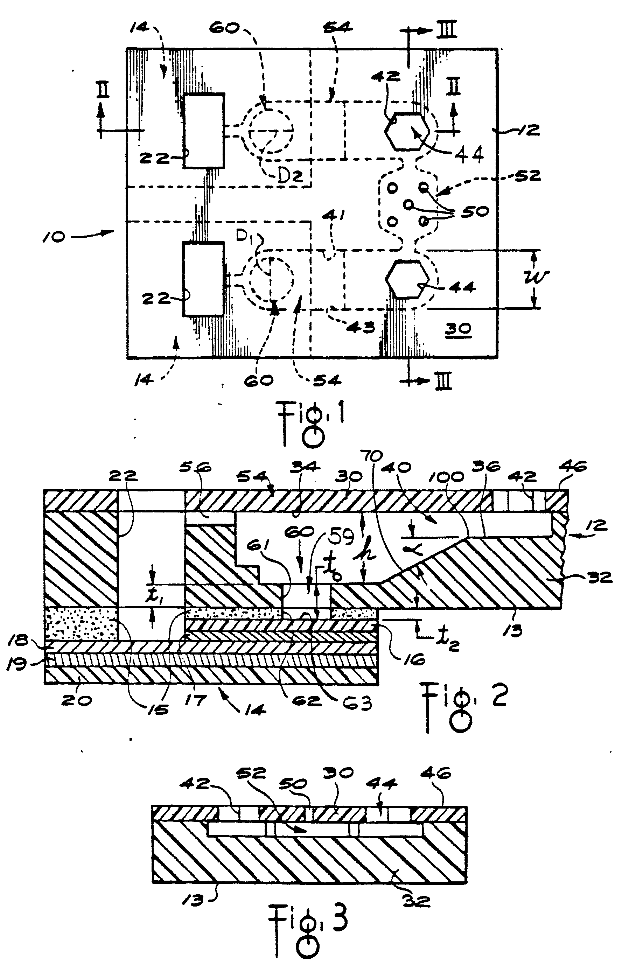

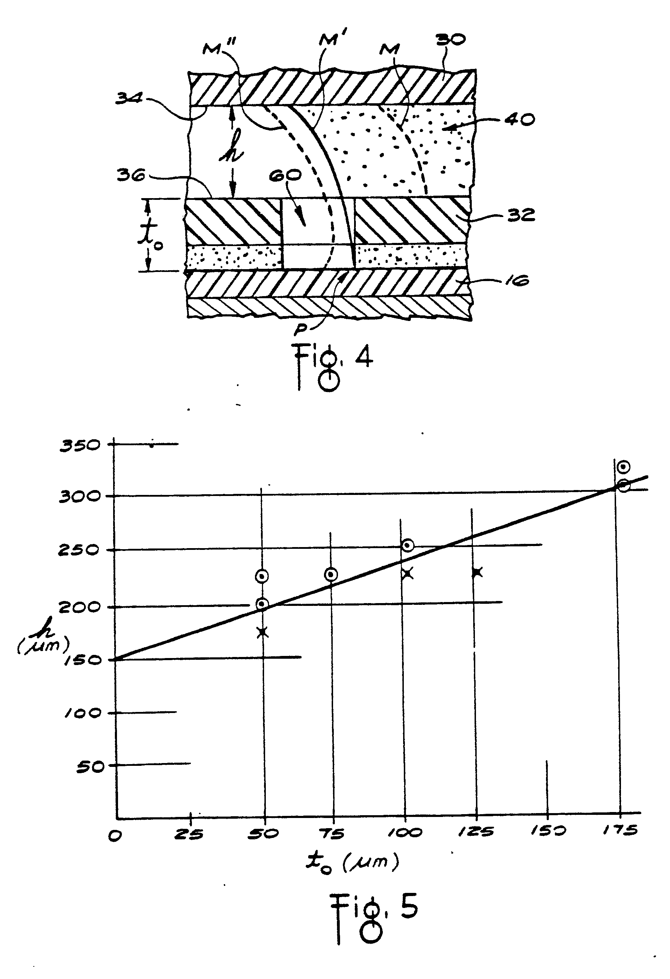

In Fig. 1, there is shown a liquid transport device 10 which comprises an electrically insulative frame 12 which is adapted to receive a pair of generally planar, solid ion-selective electrodes 14, (hereinafter, "ISE's"). The ISE's 14 are preferably adhered to exterior surface 13 of device 10 by an adhesive formed in a layer 15 (Fig. 2). As described in U.S.—A—4,053,381, each ISE 14 is generally flat and comprises adjacent layers 16—20. (The layer thicknesses are exaggerated in Fig. 2 for clarity). Each layer 16 is an ion-selective membrane containjng an ionophore and a solvent. When a drop of sample liquid or reference liquid makes contact, the ionic analyte is carried by, or otherwise effectively penetrates through, layer 16 to the

2

underlying layers 17—18. At layer 17—18, an electrical potential is generated proportional to the activity of the ionic analyte. Layer 17 is, for example, a dried hydrophilic binder containing the salt $X^{\oplus}Z^{\ominus}$ where $X^{\oplus}$ is the analyte to be measured. Layer 18 in such instances is the $Z^{\ominus}$ salt of an electrically conductive metal $M^{\oplus}$, and metal $M^{\circ}$ forms layer 19. Layer 20 is an insulative support. Because layers 18 and 19 are electrically conductive layers, a potential can be detected by an electrometer (not shown) via probes (not shown) which are inserted through windows 22 in frame 12 (Fig. 1) and penetrate through layer 18 and into contact with layer 19. Any difference between the activity of the ionic analyte in the sample fluid and in the reference fluid is registered as a difference in potential on the electrometer (not shown). This reading then is converted into a measure of concentration of the ionic analyte.

Useful embodiments include those in which one or more of layers 16—19 are altered, omitted, or added to. For example, an ISE (not shown) can be constructed to test for $Cl^{\ominus}$ in which the top layer is cellulose acetate containing a surfactant and polyethylene glycol for the purpose of removing bromide interference, as described in U.S.—A—4,199,411.

Frame 12 is formed by a pair of members 30 and 32 arranged to define a capillary transport zone 40 (Fig. 2) and having opposing internal surfaces 34, 36, and an exterior surface 46. Surfaces 34 and 36 are spaced apart a distance h effective to provide capillary flow of liquid introduced into zone 40 in the manner described in U.S.—A—4,302,313. The spacing of surfaces 34 and 36 is preferably no greater than about 600 µm.

In addition to the opposing surfaces 34 and 36, zone 40 is further defined by a pair of sidewalls 41 and 43 (Fig. 1) which are spaced apart a width w to define the flow-through width of zone 40. Alternatively, an exposed edge (not shown) can act as a flow-terminating means, as is described in U.S.—A—4,254,083.

To admit the sample and reference liquids into zone 40, access apertures 44 (Figs. 1—3) are formed in member 30. Apertures 44 preferably have a shape that includes at least one corner 42 to insure that a drop of liquid deposited by a metering device (not shown) on exterior surface 46 (Fig. 2), at one of the apertures 44, will enter the aperture 44 and thus flow into zone 40. Most preferably, the apertures 44 are shaped for this purpose in the manner described in U.S.—A—4,254,083. As shown in Fig. 1, a particularly useful flow-through shape for apertures 44 is hexagonal.

To vent entrapped air from zone 40 as the sample and reference liquids move toward each other, one or more apertures 50 (Figs. 1 and 3) are formed in a bridge portion 52 of member 30 which extends between apertures 44. Apertures 50 are much smaller than apertures 44 because they do not need the volume capability of the latter. When the liquids contact each other in the vicinity of apertures 50, they form an ion bridge, the first part of the ionic circuit needed for ion measurement by the electrometer (not shown).

Arm portions 54 of zone 40 extend from bridge portion 52, thus making zone 40 generally U-shaped. The sample liquid and reference liquid are carried towards ISE's 14 by arm portions 54. To allow venting of air entrapped ahead of liquid advancing along arm portions 54, an air vent 56 (Fig. 2), is provided in each portion 54 of zone 40. Each vent 56 preferably has a greatly reduced flow-through diameter, for example, 75 µm or less, to minimize gas-liquid interchange in the liquid under test. For example, if the ISE's 14 are chosen to test for $CO_2$ (or $HCO_3^{\ominus}$), then it is undesirable that a large surface area of the liquid should be exposed to the air. To this end, zone 40 is sealed along the edges and is "vented" only at vents 50 and 56 and access apertures 44.

A second capillary transport zone 59 commences with an aperture 60 (Fig. 2) having a sidewall 61 that extends from surface 36 of member 32 to exterior surface 13. Aperture 60 includes a first dimension $D_1$ that extends in a direction generally transverse to the direction of liquid flow from access aperture 44 to aperture 60 and is parallel to width w of arm portion 54 and a second dimension $D_2$ that extends generally parallel to the direction of liquid flow. In the embodiment shown, dimensions $D_1$ and $D_2$ are equal and comprise the diameter of aperture 60. Aperture 60 is most preferably centered between sidewalls 41 and 43 and is fluidly connected to an aperture 62 formed in and surrounded by adhesive layer 15, and layer 16 provides a terminating surface 63 of the second zone 59. The second zone 59 has a length $t_0$, which is the distance the liquid must flow in the zone 59, and which extends from the intersection of sidewall 61 with surface 36 to terminating surface 63. Length $t_0$ is equal to the sum of $t_1$, the thickness of member 32 at aperture 60, and $t_2$, the thickness of adhesive layer 15 at aperture 62. To insure adequate contact with the ISE's 14 at layer 16, the flow-through area of apertures 60 and 62 is greater than 0.2 mm².

Second zone 59 is not vented. An air vent in zone 59 would be disadvantageous for several reasons. First, it would tend to render non-constant the area of contact of liquid on the terminating surface 63 of the second zone 59; a non-constant area of contact on surface 63 interferes with the maintenance of a constant signal. Second, an air vent in zone 59 would tend to cause a change in concentration of certain ions, such as $HCO_3^{\ominus}$, and to cause leakage of the liquid, producing contamination. Third, an air vent would unnecessarily complicate the design and assembly.

In accordance with one aspect of the invention, adequate flow of liquid to the terminating surface 63 of layer 16 occurs if the proper value of liquid head h is selected for a given value of $t_0$, and the proper width w is selected relative to the dimension $D_1$ of the aperture 60. That is, for a given set of conditions, the head h is an empirically determinable function of $t_0$. This function appears to be dependent on the surface tension of the liquid flowing in the device 10, the contact angle that liquid forms with the surface 34 of the first zone 40, and the relative value of the dimension $D_1$ of aperture 60, compared to the flow-through width w of the first zone 40 at aperture 60. The exact expression of the function and the mechanism causing it are not completely understood for all conditions, although a specific embodiment is hereinafter described. The mechanism appears to be that schematically illustrated in Fig. 4. In the illustrated embodiment, member 30 is selected with a surface 34 that is a readily wettable material having a contact angle for serum between 60° and 80°, although materials having lower contact angles, even those approaching 0°, are acceptable. Member 32, on the other hand, has a surface 36 that is a relatively non-wettable material, with a contact angle greater than or equal to 85°. In such a case, the meniscus M advances from its position, shown in zone 40 in dashed lines, generally with the shape shown, until it encounters aperture 60. If h is sufficiently large for a given $t_0$, and values for $D_1$ and w are properly selected as described hereinafter, the liquid continues to advance to form a meniscus M', shown in solid lines. At this stage, the liquid contacts the surface 63 of layer 16, e.g., at point P, before the liquid completely surrounds aperture 60. If all other factors are held constant, the greater the distance $t_0$, the greater the value h must be to provide the energy that insures this contact with surface 63 will occur before the liquid flow in zone 40 surrounds the aperture 60. As previously noted, flow in the first zone 40 which results in surrounding the diverting aperture 60 before liquid contact is made with the terminating surface 63 of layer 16 is to be avoided. It has been found that it is difficult to fill the second zone 59 once the diverting aperture 60 is so surrounded because of air entrapment in zone 59.

Once contact is achieved with the surface 63 of layer 16, the liquid advances to form a meniscus M'' and then to fill up second zone 59.

Substantially the same results can be obtained if the contact angles of the liquid on surfaces 34 and 36 are the reverse of the arrangement described above. In such a case (not shown), meniscus M advances with the portion of liquid on surface 36 leading the portion of liquid on surface 34 until aperture 60 is reached. The energy barrier of the aperture 60 acts to "pin" the bottom edge of the meniscus (not shown) while the top edge (not shown) moves forward until a meniscus is formed approximately as shown at M'. Thereafter, filling of the second zone 59 occurs as in the previously-described embodiment. However, the ability of the liquid to wet a given material for members 30 and 32 will tend to alter how much head h is needed for a given thickness $t_0$, as will the surface tension of the liquid. For example, the greater the wettability of surface 34 compared to surface 36, the more the liquid on surface 34 "leads" the liquid on surface 36. The greater this difference, the greater the pressure that the head h tends to apply, and the greater the distance that is useful for $t_0$. Further, the value of h for a given $t_0$ also depends on the resistance to flow provided by the diverting aperture 60. If the width w of zone portion 54 (Fig. 1) is much greater than the dimension $D_1$ of aperture 60, the liquid will act as though the aperture 60 were not there, and surround aperture 60 before it contacts surface 63. On the other hand, if the flow-through width w only equals the dimension $D_1$ of the diverting aperture 60, the resistance to flow into the diverting aperture 60 is increased to the point where the device is inoperative. More specifically, if aperture 60 is, for example, rectangular (not shown) with a flow-through length extending parallel to the width w and equal to that width w, liquid flow in zone 40 will not readily proceed into aperture 60. Therefore, the resistance to flow in zone 40 created by the diverting aperture 60, the advancing contact angles for the materials used for surfaces 34, 36, and the liquid surface tension must be considered in determining the value of h for a given $t_0$.

For one preferred embodiment of this invention, the surface 34 of member 30 is selected from materials that provide a contact angle, for the liquid to be used, of between 60° and 80°, as described above in connection with Fig. 4. The ratio of width w of zone 40 to the dimension $D_1$ of aperture 60 is between 1.1 to 1 and 1.5 to 1. Stated reversely, the dimension $D_1$ of the diverting aperture 60 is between about 0.65 and about 0.9 of the width w. Care is taken to center aperture 60 between sidewalls 41 and 43; otherwise the range of ratios noted above for $D_1$ and w will not accurately reflect the conditions needed for proper flow. More specifically, insufficient clearance of the aperture 60 along one of the sidewalls 41, 43, and a large clearance at the other sidewall 41, 43 permits liquid to flow past the aperture 60 through the large clearance, and the aperture 60 becomes surrounded by the liquid. Finally, the terminating surface 63 of layer 16 is selected so as to have an advancing contact angle less than about 85°, and a receding contact angle no greater than about 30°, to prevent the liquid from de-wetting at point P. De-wetting at point P tends to cause fluid to surround aperture 60 resulting in entrapped air in the second zone 59.

Thus, particularly preferred devices include those in which at least surface 34 of member 30 is triacetate, at least surface 36 of member 32 is polystyrene, aperture 60 is circular, the ratio of width w to dimension $D_1$ of aperture 60 is about 1.28 to 1.0, and layer 16 is a cellulose acetate overcoat of a chloride electrode as described in the aforesaid U.S.—A—4,199,411. Preferred dimensions $D_1$, $D_2$, of aperture 60, in such embodiments, range between about 2.0 mm and about 5.0 mm, provided that the width w of zone 40 is modified to provide the 1.28 to 1 ratio noted above. Preferably, the dimension $D_2$ is greater than 0.4 of dimension $D_1$. For such an embodiment, as will be seen in the examples that follow, the relationship between h and $t_0$, such that satisfactory wetting of the ISE occurs, is $h \geqslant 150 + 0.87\, t_0$, measured in micrometres. Since it is desired that, for good capillary flow, h should not exceed about 600 μm, then $t_0$ in such an embodiment does not exceed about 515 μm.

Thus it will be apparent that the present invention provides more reliable flow over a longer length than was suggested for use in the device of the aforesaid U.S.—A—4,271,119, in the absence of an air vent in the second zone.

The second zone need not terminate with the surface 63 of layer 16 adhered directly to member 32 in order for the diverting aperture 60 to function as described. That is, useful embodiments include those in which the terminating surface 63 of the second zone 59 is spaced a short distance from the apertured member 32 by an intervening wall member (not shown), as shown for example in Fig. 2 of U.S.—A—4,271,119.

The liquid head h of zone 40 at aperture 60 is a useful capillary spacing throughout zone 40. However, to conserve the volume of liquid required to fill zone 40, those portions of zone 40 spaced from aperture 60 are preferably decreased in their capillary spacing. An additional advantage of such a construction is that it permits member 32 to be thicker, at portions removed from aperture 60, for ease in manufacturing. The spacing between surfaces 34 and 36 is increased from the relatively narrow spacing in portion 52 by means of ramp 70, ramp 70 being preferably inclined at an angle α of less than 30° (Fig. 2) until the maximum value of h is reached as advancing liquid approaches aperture 60. Angle α is selected to be small to avoid creating an energy barrier at 100 to the flow of liquid.

The invention has been described in connection with diverting apertures 60 that are circular. It will be readily apparent that non-circular apertures are also useful with the invention. Thus, a square flow-through shape (not shown) is also useful, as are the shapes described in the aforesaid U.S.—A—4,271,119.

Examples 1—3

A first capillary transport zone was provided by two spaced-apart members wherein the bottom member was a sheet of polystyrene apertured with a circular punch that was about 2.5 mm in diameter. The top member was triacetate and the width w of the first zone at the diverting aperture was about 3.2 mm. To create the second zone, the apertured member was adhered, at the aperture, to a Cl$^\ominus$ ISE as described above, using a layer of Gelva (trade mark) adhesive that was about 25.4 μm thick. To vary the fluid height above the aperture and the thickness of the second zone, the thicknesses of a) the spacer separating the opposed surfaces of the first zone and of b) the bottom member, were varied as set forth in the following Table I:

TABLE I

| Example | Spacer thickness (h)* | Thickness of bottom member* | Total thickness second zone $(t_0)$* |
|---|---|---|---|
| 1 | 229 μm | 25.4 μm | 51 μm |
| 2 | 254 μm | 76 μm | 102 μm |
| 3 | 203 μm | 25.4 μm | 51 μm |
| Comp. Ex. 1 | 229 μm | 102 μm | 127 μm |
| Comp. Ex. 2 | 178 μm | 25.4 μm | 51 μm |

*These thicknesses were determined by selecting thicknesses measured as mils of an inch and then converting to rounded metric units.

To determine whether liquid would flow into the punched aperture, 5 ml of human serum or water was used as the liquid, each being spiked with 100 μl of a fluorescent composition comprising europium imbibed in a styrene-acrylamide methacrylic acid latex, for enhanced visual observation. (Other fluorescent materials also are useful). In addition, the ISE was connected, at the portion corresponding to the exposed surface at window 22 of Fig. 2, to a voltmeter set at the 10K ohm setting. The other probe of the voltmeter was immersed in the liquid that was supplied to the first capillary zone. When and only when liquid filled the second zone comprising the circular aperture, the voltmeter went off scale. The results are shown below in Table II.

# 0 090 636

## TABLE II

| Example | Liquid tested | Flow successfully diverted? |
|---|---|---|
| 1 | serum | Yes |
| 2 | serum | Yes |
| 3 | serum | Yes |
| Comp. Ex. 1 | serum | No |
| Comp. Ex. 2 | water | No |

**Examples 4 and 5**

The procedure of Example 1 was repeated except h was selected to equal about 305 µm and about 330 µm respectively. Total thickness $t_0$ was equal to 178 µm in both cases, by using a bottom member having a thickness of about 102 µm and a 25.4 µm thick tape having adhesive on both sides. The thickness of the adhesive on each side was about 25.4 µm. In both Examples 4 and 5, satisfactory flow of serum into the second zone and wetting of the electrode were observed.

**Example 6**

The procedure of Examples 1—3 was repeated, using spiked serum, and the terminating surface for the second zone (under the circular aperture) was glass instead of the $Cl^\ominus$ ISE. No voltmeter was used to determine diversion of flow. As a control, the thicknesses were selected to give h=229 µm and $t_0$=127 µm. Diversion of flow did not occur, as determined visually. However, when this experiment was repeated (Example 6) with a thickness $t_0$ equal to only 76 µm, diversion of capillary flow did occur.

The values for h and $t_0$ used in Examples 1—6 were plotted in the graph of Fig. 5. Those values that provided successful flow to the terminating surface of the second zone are marked with circles, and those comparative examples that failed with "x's". As is apparent, the data indicates a linear division between successful flow and unsuccessful flow, which division approximately follows the equation 1) h=150+0.87 $t_0$, measured in micrometres. Thus, if for the device described in Example 1, h equals or exceeds the value predicted by equation 1), the liquid introduced into the first zone also flows into the second zone and wets the ISE, without the need for an air vent in the second zone.

## Claims

1. A liquid transport device comprising members (30, 32) and sidewalls (41, 43) arranged to define a first capillary transport zone (40), said members (30, 32) having a first set of opposing surfaces (34, 36) spaced apart a distance (h) effective to provide capillary flow of liquid introduced into said zone (40), said sidewalls (41, 43) defining a flow-through width (w) of said zone (40), said device having liquid access means (44) for receiving liquid into said zone (40) and a vent (56) for venting air from said zone (40), means (61, 63) defining a second nonvented capillary transport zone (59), one of said members (30, 32) having a diverting aperture (60) having a flow-through area greater than 0.2 mm² for diverting liquid into said second zone (59), said second zone (59) having a length ($t_0$) and a terminating surface (63) at one end of said second zone (59), said aperture (60) having a first dimension ($D_1$) extending transverse to the direction of liquid flow from said access means (44) to said aperture (60) and a second dimension ($D_2$) extending generally parallel to said direction, characterized in that said second dimension ($D_2$) is greater than 0.4 of said first dimension ($D_1$), and the relationship of said first dimension ($D_1$) to said width (w) and of said distance (h) to said length ($t_0$) being effective to insure that the liquid in said first zone enters said diverting aperture (60) and contacts said surface (63) before the liquid in said zone (40) surrounds said aperture (60), said distance (h) being at least that defined by the equation

$$h = (150 + 0.87\ t_0)\ \text{micrometres}$$

wherein h is said distance and $t_0$ is said length of said second zone, at least one of said surfaces (34, 36) being readily wetted by a liquid having a surface tension between 0.025 Nm⁻¹ and 0.075 Nm⁻¹.

2. A device according to claim 1, characterized in that one of said surfaces (34, 36) is located opposite to said diverting aperture (60) and is made of a material which forms a contact angle with said liquid of between 60° and 80°.

3. A device according to claim 1 or 2, characterized in that said diverting aperture (60) is circular in shape.

6

4. A device according to any one of the preceding claims, characterized in that a portion of said terminating surface (63) is adhered to said one member at said diverting aperture (60).

5. A device according to any one of the preceding claims, characterized in that said distance (h) of said first zone (40) is less at locations spaced from said diverting aperture (60) than at said diverting aperture (60).

6. A device according to any one of the preceding claims characterized in that the ratio of said flow-through width (w) of said first zone (40) at said diverting aperture (60) to said first dimension ($D_1$) of said diverting aperture (60) is between 1.1 to 1 and 1.5 to 1.

7. A device according to any one of the preceding claims, characterized in that said terminating surface (63) is an exterior surface of an ion-selective electrode (14).

8. A device according to claim 7, characterized in that said ion-selective electrode (14) comprises layers of materials adapted to assay for $Cl^{\ominus}$.

**Patentansprüche**

1. Flüssigkeitstransportvorrichtung mit Elementen (30, 32) und Seitenwandungen (41, 43), die so angeordnet sind, daß sie eine erste kapillare Transportzone (40) bilden, wobei die Elemente (30, 32) einen ersten Satz von einander gegenüberliegenden Flächen (34, 36) aufweisen, deren Abstand (h) eine kapillare Strömung der in die Zone (40) eingeführten Flüssigkeit bewirkt, und wobei die Seitenwandungen (41, 43) eine Durchflußbreite (w) der Zone (40) bestimmen, weiterhin mit Flüssigkeitseinlaßmitteln (44) zur Einführung von Flüssigkeit in die Zone (40) und einer Entlüftungsöffnung (56), durch die Luft aus der Zone (40) entweichen kann, mit Mitteln (61, 63) die eine zweite, nicht entlüftete, kapillare Transportzone (59) bilden, wobei eines der Elemente (30, 32) eine Umlenköffnung (6) aufweist, deren Durchflußbereich größer als 0,2 mm² ist und die zum Umlenken von Flüssigkeit in die zweite Zone (59) dient, die eine Länge ($t_0$) besitzt, und mit einer Abschlußfläche (63) an einem Ende der zweiten Zone (59), wobei die Umlenköffnung (60) eine erste Abmessung ($D_1$) besitzt, die sich quer zu der Richtung erstreckt, in der die Flüssigkeit von den Einlaßmitteln (44) zu der Umlenköffnung (60) strömt, und eine zweite Abmessung ($D_2$), die allgemein parallel zu dieser Richtung verläuft, dadurch gekennzeichnet, daß die zweite Abmessung ($D_2$) größer ist als 0,4 der ersten Abmessung ($D_1$) und das Verhältnis der ersten Abmessung ($D_1$) zu der Breite (w) und des Abstands (h) zu der Länge ($t_0$) so gewählt sind, daß sichergestellt ist, daß die Flüssigkeit in der ersten Zone in die Umlenköffnung (60) eintritt und mit der Fläche (63) in Berührung kommt, bevor die Flüssigkeit in der Zone (40) die Umlenköffnung (60 umgibt, wobei der Abstand (h) mindestens durch die Gleichung

$$h = (150 + 0{,}87\ t_0)\ \mu m$$

bestimmt ist, in der h den Abstand und $t_0$ die Länge der zweiten Zone angeben, und wobei mindestens eine der Flächen (34, 36) schnell durch eine Flüssigkeit befeuchtet wird, deren Oberflächenspannung zwischen 0,025 Nm⁻¹ und 0,075 Nm⁻¹ liegt.

2. Vorrichtung nach Anspruch 1, dadurch gekennzeichnet, daß eine der Flächen (34, 36) gegenüber der Umlenköffnung (60) angeordnet ist und aus einem Material besteht, das mit der Flüssigkeit einen Kontaktwinkel von 60° bis 80° bildet.

3. Vorrichtung nach Anspruch 1 oder 2, dadurch gekennzeichnet, daß die Unlenköffnung (60) eine kreisrunde Form besitzt.

4. Vorrichtung nach einem der vorhergehenden Ansprüche, dadurch gekennzeichnet, daß ein Teil der Abschlußfläche (63) an einem der Elemente an der Ablenköffnung (60) haftet.

5. Vorrichtung nach einem der vorhergehenden Ansprüche, dadurch gekennzeichnet, daß der Abstand (h) der ersten Zone (40) an Stellen, die sich im Abstand von der Umlenköffnung (60) befinden, geringer ist als an der Umlenköffnung (60).

6. Vorrichtung nach einem der vorhergehenden Ansprüche, dadurch gekennzeichnet, daß das Verhältnis der Durchflußbreite (w) der ersten Zone (40) an der Umlenköffnung (60) zu der ersten Abmessung ($D_1$) der Umlenköffnung (60), 1,1:1 bis 1,5:1 beträgt.

7. Vorrichtung nach einem der vorhergehenden Ansprüche, dadurch gekennzeichnet, daß die Abschlußfläche (63) eine Außenflächen einer ionenselektiven Elektrode (14) ist.

8. Vorrichtung nach Anspruch 7, dadurch gekennzeichnet, daß die ionenselektive Elektrode (14) Materialschichten aufweist, mit denen eine Analyse auf $Cl^{\ominus}$ erfolgen kann.

**Revendications**

1. Dispositif pour transporter un liquide comprenant des éléments (30, 32) et des parois latérales (41, 43) agencées de manière à délimiter une première zone (40), lesdits éléments (30, 32) présentant un premier jeu de surfaces (34, 36) en regard séparées par une distance (h) apte à induire un écoulement capillaire de ce liquide lorsqu'il est introduit dans ladite première zone (40), lesdites parois (41, 43) délimitant un espace de largeur (w) de ladite première zone (40), ledit dispositif présentant des moyens d'accès (44) pour recevoir le liquide dans ladite première zone (40) et un évent (56) pour évacuer l'air de ladite première zone (40), des moyens (61, 63) définissant une seconde zone (59) non ventilée, l'un desdits éléments (30, 32) présentant une ouverture (60) de section supérieure à 0,2 mm² pour dévier le liquide dans ladite seconde zone, ladite seconde zone (59) présentant une longueur ($t_0$) et se terminant par une surface d'extrémité (63), ladite ouverture (60) présentant une première dimension ($D_1$) dans la direction perpendiculaire à la progression du liquide à partir desdits moyens d'accès (44) vers ladite ouverture et une seconde dimension ($D_2$) prise suivant une direction pratiquement parallèle à ladite progression, caractérisé en ce que ladite seconde dimension ($D_2$) est supérieure à 0,4 fois la première dimension ($D_1$) et en ce que d'une part la première dimension ($D_1$) est liée à la largeur (w) et d'autre part la distance (h) est liée à la longueur ($t_0$) de manière à ce que le liquide contenu dans la première zone (40) pénètre dans ladite ouverture (60) et vient au contact de ladite surface d'extrémité (63) avant que ce liquide n'entoure la totalité de ladite ouverture (60), ladite distance (h) étant au moins égale à la longueur définie par l'équation

$$h = (150 + 0{,}87\ t_0)\ \mu m$$

dans laquelle h représente la distance et $t_0$ représente ladite longueur de la seconde zone, et au moins l'une desdites surfaces (34, 36) étant facilement mouillée par un liquide présentant une tension superficielle comprise entre 0,025 Nm⁻¹ et 0,075 Nm⁻¹.

2. Dispositif conforme à la revendication 1, caractérisé en ce que l'une desdites surfaces du premier jeu (34, 36) est situé en regard de ladite ouverture 60 et est constituée d'une substance telle que cette paroi forme avec ledit liquide un angle de contact compris entre 60° et 80°.

3. Dispositif conforme à l'une quelconque des revendications 1 et 2, caractérisé en ce que ladite ouverture (60) présente une forme circulaire.

4. Dispositif conforme à l'une quelconque des revendications 1 à 3, caractérisé en ce que ladite surface d'extrémité (63) est fixé audit élément (30, 32) présentant ladite ouverture (60) autour de cette dernière.

5. Dispositif conforme à l'une quelconque des revendications 1 à 4, caractérisé en ce que la distance (h) au niveau de ladite première zone est moins grande aux endroits éloignés de ladite ouverture (60) qu'au niveau de ladite ouverture (60).

6. Dispositif conforme à l'une quelconque des revendications 1 à 5, caractérisé en ce que le rapport entre ladite largeur (w) de la première zone (40) au niveau de ladite ouverture (60) à la première dimension ($D_1$) de ladite ouverture (60) est compris entre 1.1 et 1.5.

7. Dispositif conforme à l'une quelconque des revendications 1 à 6, caractérisée en ce que ladite surface d'extrémité est la surface externe d'une électrode sélective d'ions (14).

8. Dispositif conforme à la revendication 7, caractérisé en ce que ladite électrode (14) comprend plusieurs couches adaptées au titrage des ions Cl⁻.

Fig. 1

Fig. 2

Fig. 3

Fig. 4

Fig. 5

2